# EUROPEAN PATENT APPLICATION

(11) **EP 2 784 673 A1**
(43) Date of publication of application: **01.10.2014**
(21) Application number: 13305397.5
(22) Date of filing: 28.03.2013
(51) Int. Cl.: G06F 9/48

(54) **Scheduling**

(71) Applicant: ALCATEL LUCENT, 92100 Boulogne-Billancourt (FR)
(72) Inventor: Cucinotta, Tommaso, Dublin, Dublin 15 (IE)
(74) Representative: Coghlan, Judith Elizabeth Kensy

(57) **Abstract**

A method of adjusting a scheduling parameter associated with a runnable in a multi-programmed computing system, a computer program product and scheduling unit operable to perform that method. The method comprises: analysing header information associated with a data packet received by the computing system and addressed to or from the runnable; determining whether the information associated with the data packet meets scheduling action trigger criteria; and adjusting the scheduling parameter associated with the runnable in accordance with an action associated with the meeting of the scheduling action trigger criteria. Aspects allow for dynamic change of scheduling parameters associated with a runnable in response to reception of a packet. That dynamic change depends on the properties of the received packet. Aspects allow a runtime environment to wake a runnable up and assign the runnable an appropriate priority and/ or urgency of execution. Those decisions can be determined based on information derived from a header of received network packets, for example.

## Description

### FIELD OF THE INVENTION

The present invention relates to a method of adjusting a scheduling parameter associated with a runnable in a multi-programmed computing system, a computer program product and scheduling unit operable to perform that method.

### BACKGROUND

Typical multi-programmed computing systems, such as those comprising an Operating System (OS) running multiple processes, or a Virtual Machine Monitor (VMM) running multiple virtual machines (VMs), scheduling of runnable entities ("*runnables*" comprising processes or VMs) is performed by a scheduler. The scheduler of OS or VMM runtime is typically configured to implement scheduling in accordance with parameters associated with each runnable. When a runnable is waiting for reception of data packets, a scheduling state associated with that runnable is changed from "ready-to-run" to "sleeping" (or suspended). If a packet for a sleeping runnable is received by a scheduler, the runtime is configured to wake the runnable and change its scheduling state from sleeping (or suspended) back to ready-to-run.

The runnable is scheduled on an available CPU(s) only when the scheduler decides so, according to scheduling parameters already configured at the scheduler in relation to that runnable.

For example, if a runnable is configured with a selected fixed priority and the runtime scheduler operates to schedule runnables according to a fixed priority scheduling discipline, then the runnable, once woken up by reception of a packet within the system, is able to run only when there are no higher-priority ready-to-run runnables to be scheduled before it.

Current scheduling schemes may cause unforeseen problems. It is desired to offer an alternative implementation of scheduling techniques.

### SUMMARY

Accordingly, a first aspect provides: a method of adjusting a scheduling parameter associated with a runnable in a multi-programmed computing system, the method comprising: analysing header information associated with a data packet received by the computing system and addressed to the runnable; determining whether the information associated with the data packet meets scheduling action trigger criteria; and, if so, adjusting the scheduling parameter associated with the runnable in accordance with an action associated with the meeting of the scheduling action trigger criteria.

The first aspect recognizes that mechanisms such as those described above can be suited to runnables which handle only one, or a limited set of, well-defined functionalities. In the case of a runnable which is configured to perform different heterogeneous actions, which themselves handle different types of traffic, such as a Virtual Machine in a Cloud Computing infrastructure, it may be useful to be able to dynamically reconfigure scheduling parameters associated with a runnable. That dynamic reconfiguration may be implemented such that scheduling parameters or priorities of a runnable are altered or maintained in dependence upon, for example, properties of a received packet to be delivered to the runnable.

The first aspect recognizes that if a runnable was operable to reconfigure its own scheduling parameters after having received a packet (for example, by use of a process calling a standard POSIX sched_setparam() syscall after having received a packet for tuning scheduling priority according to the type of received packet), the mechanism is unlikely to result in a desired outcome. In particular, when a packet is queued by a VMM or OS runtime to be received by a runnable, the runnable scheduling state is switched back to ready-to-run, resulting in it being actually run only when deemed appropriate by the scheduler, according to existing scheduling parameters. Thus it will be appreciated that taking action to change the scheduling priority associated with a runnable could only be executed after the runnable has been scheduled to receive the packet by a runtime scheduler.

The first aspect recognizes that it is desirable to implement a mechanism which allows a change to scheduling parameters associated with a runnable as soon as the runnable is woken up in response to receipt of a packet. Such a mechanism may operate so as to fine-tune responsiveness and urgency of decisions made by a scheduler in relation to a runnable, such that the runnable can be scheduled on an available CPU(s), according to expected computational "work" to be carried out by a runnable as a consequence of receipt of a packet.

In one embodiment, the runnable comprises: a process or virtual machine. Accordingly, the method may be of use in systems in which a scheduler or VMM may typically be blind to the nature of work to be performed by a virtual machine on a given data packet. Rather than specifying a static scheduling priority in relation to a virtual machine, different functions being performed by a virtual machine within a system may essentially be individually prioritised as a result of scheduling parameters which can be dynamically updated in accordance with the present method.

In one embodiment, the scheduling parameter comprises one or more of: an indication of a scheduling priority, an indication of a scheduling deadline or an indication of a required reservation threshold associated with the runnable. Accordingly, actions associated with triggers can be configured to be able to cope with changes in scheduling parameters and changes to state of an involved runnable. For example, changing the priority for a priority-based scheduler; changing the deadline for a deadline-based scheduler; changing the budget and/ or period for a reservation-based scheduler.

In one embodiment, the header information comprises one or more of: a specific port to which the data packet is to be delivered; a specific port from which the data packet has been sent; an indication of a transmit time of the data packet; an indication of a scheduling deadline associated with the data packet; an indication of data type carried in the data packet payload; or an indication of a priority associated with the data packet payload. Accordingly various trigger criteria may be implemented. The trigger specifies a condition to be checked for each network packet being handled by the runtime; and if said condition is recognized to be satisfied, then the corresponding action contained in the rule is executed. The language describing the triggers and actions to be taken in response to a trigger is such that it includes conditions related to one or more of: the scheduling state, or parameters of a destination runnable of an incoming packet, or a source runnable of an outgoing packet. Triggers may be set in relation to availability of remaining budgets in reservation-based schedulers. For example a rule may exist which triggers when a received packet is of a given type, and a residual budget within a destination runnable reservation is at least greater than a preselected threshold value. According to one example, a stateful trigger may be implemented such that the trigger identifies the set-up of a TCP/IP connection of a runnable, or the trigger identifies a packet sent by a runnable in response to a specific HTTP request.

In one embodiment, adjusting the scheduling parameter comprises one or more of: increasing or decreasing a scheduling priority, updating a scheduling deadline, or selecting a resource reservation associated with the runnable. A great degree of flexibility is possible in relation to both trigger criteria and actions taken in response to trigger criteria. The syntax for specifying rules and actions is such that it may be possible to specify algebraic expressions involving scheduling parameters to be managed, as well as a time at which a rule is triggered. For example, for a deadline-based scheduling policy, it is possible to say that, whenever a packet of a given protocol/ port is received to be delivered to a specific runnable, the scheduling deadline of that runnable is set a fixed period into the future. In other words, it should be set equal to the current time plus a fixed runnable-specific relative deadline.

In one embodiment, the adjustment to the scheduling parameter is applied before the data packet is forwarded to the runnable. Accordingly, in contrast to existing methods, the packet itself may immediately benefit from a change in scheduling paramters associated with a runnable.

In one embodiment, the method comprises determining whether the packet is of a type requiring a response packet to pass through the computing system and maintaining an adjustment to the scheduling parameter at least until that response packet is detected. Furthermore, the syntax of implementation of the method described herein may, according to some embodiments, allow the determination, within packets, protocol-specific fields. Accordingly, in the specification of triggers and/or actions, the syntax may allow for the use of such protocol-specific information. For example, in a particular protocol, one may define a field conveying some numeric information about the priority of the distributed computation to be carried out, or the accumulated delay since the beginning of the distributed computation, or a time-stamp referring to some specific moment throughout the distributed computation. A triggered rule may be operable to compute simple algebraic expressions based on values determined as part of the trigger, the associated action to be performed, or both. For example, rules may be implemented which allowed the setting of a scheduling deadline by adding a time period to a time-stamp read from the header of a packet, in the context of a specific network protocol.

In one embodiment, if there are no data packets addressed to or from the runnable within a selected period, the method comprises setting the scheduling parameter to a default value associated with the runnable.

It will be appreciated that, depending on the OS or VMM architecture of a system, whenever a network packet needs to be handled by multiple schedulable entities, for example, kernel threads or regular threads and processes, it is possible to utilize aspects and embodiments described. The mechanism of aspects can be implemented in various places throughout the processing pipeline of network packets, and can be configured to control and fine-tune scheduling parameters controlling both the system runnables that will process the packet next, and the application runnable(s) that will finally receive and handle such packets.

Aspects and embodiments allow customization of behavior of a CPU scheduler in a multi-programmed environment, that customization taking into account what kind of network traffic is being handled by scheduled runnables. This can be particularly useful in virtualized infrastructures where a single VM typically handles heterogeneous types of activities with different timing requirements, including both batch activities as well as real-time interactive and multimedia ones.

A second aspect provides a computer program product operable, when executed on a computer, to perform the method of the first aspect.

A third aspect provides a scheduling unit operable to adjusting a scheduling parameter associated with a runnable in a multi-programmed computing system, the scheduling unit comprising: analysis logic operable to analyse header information associated with a data packet received by the computing system and addressed to or from the runnable; trigger logic operable to determine whether the information associated with the data packet meets scheduling action trigger criteria; and action logic operable to adjust the scheduling parameter associated with the runnable in accordance with an action associated with the meeting of the scheduling action trigger criteria.

In one embodiment, the runnable comprises: a process or virtual machine.

In one embodiment, the scheduling parameter comprises one or more of: an indication of a scheduling priority, an indication of a scheduling deadline or an indication of a required reservation threshold associated with the runnable.

In one embodiment, the header information comprises one or more of: a specific port to which the data packet is to be delivered; a specific port from which the data packet has been sent; an indication of a transmit time of the data packet; an indication of a scheduling deadline associated with the data packet; an indication of data type carried in the data packet payload; or an indication of a priority associated with the data packet payload.

In one embodiment, the action logic is operable to adjust the scheduling parameter by: increasing or decreasing a scheduling priority, updating a scheduling deadline, or selecting a resource reservation associated with the runnable.

In one embodiment, the action logic is operable to adjust the scheduling parameter before the data packet is forwarded to the runnable.

In one embodiment, the scheduling unit is operable to determine whether the data packet is of a type requiring a response packet to pass through the computing system and maintain an adjustment to the scheduling parameter at least until a response packet is detected.

In one embodiment, if no data packets addressed to or from the runnable are detected within a selected period, the action logic is operable to set the scheduling parameter to a default value associated with the runnable.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

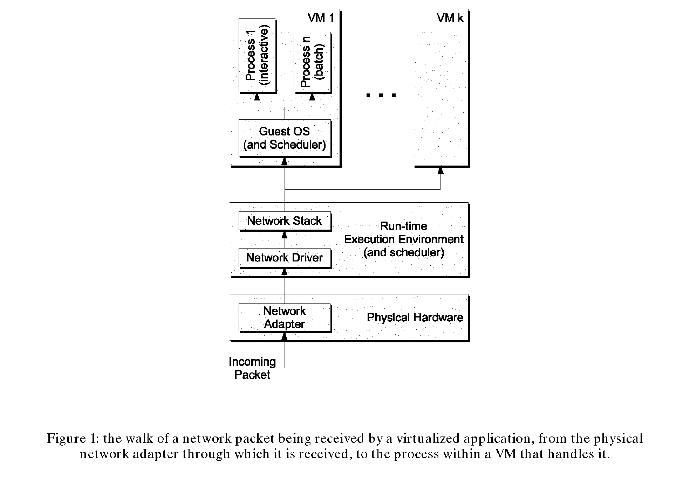

Figure 1 illustrates schematically progress of an incoming packet through a typical virtualised computing environment.

### DESCRIPTION OF THE EMBODIMENTS

Figure 1 illustrates schematically progress of an incoming packet through a typical virtualised computing environment. In the environment shown in Figure 1 a virtual machine, VM1, is configured to host an interactive network service having a tight response-time requirement, for example, a web server that has to respond very quickly to requests coming from the network. VM1 is also configured to host a network activity which does not require a prompt action, for example, a monitoring or logging service or performance of software updates. According to typical scheduling techniques, VM1 is associated with a set of scheduling parameters at the VMM scheduler. Those scheduling parameters held by the VMM in relation to VM1 may comprise, for example, a priority value or, for deadline-based scheduling, a specific computing deadline.

It will be appreciated that the heterogeneous computing activities being hosted within VM1 and described above require different scheduling parameters. Indeed, the interactive service would run well with a higher priority, whilst the non-interactive service would better be assigned a lower priority in order to avoid being scheduled only to perform batch activities.

VM1 itself comprises an internal scheduler which will typically have been configured with precise scheduling parameters in relation to the two activities being performed by VM1. Those scheduling parameters are applied whenever both runnables are ready-to-run and competing for the same (virtual) CPU. However, when the whole VM1 suspends and later wakes up in response to the virtualized environment receiving a packet for VM1, VM1 is scheduled according to the parameters configured within the VMM scheduler in relation to VM1 as a whole. If the VMM scheduling parameters in relation to VM1 are tuned according to the batch activity requirements, then the VM will not be sufficiently reactive when receiving a request targeting the interactive service. Similarly, if VM1 is associated with scheduling parameters which are good for the interactive activity, the scheduling of VM1 would be wastefully reactive when the received packet is required for dealing with traffic for the batch activity.

Aspects and embodiments provide a mechanism according to which scheduling parameters of a runnable can be changed dynamically by the runtime in response to some network activity, such as when receiving a packet directed to the runnable, but before scheduling the runnable itself to let it handle the packet.

### Overview

Before discussing the embodiments in any more detail, first an overview will be provided. The situation described above in relation to VM1 could be dealt with by separating reactive functionality and non-reactive (or batch) functionality such that they exist within different runnables. However, in a virtualized software infrastructure, such as is common in cloud computing scenarios, it is nearly impossible to isolate certain parts of a software stack belonging to a VM. For example, each VM will typically host system-level activities, for example, software updates, logging, monitoring, and similar, in addition to performance of primary activity performed by the VM

Aspects and embodiments described herein relate to a mechanism according to which scheduling parameters of one or more runnables in a system may be altered dynamically in dependence upon network activity within the system.

According to aspects and embodiments described, a software network stack of the runtime environment is extended in order to define rules specifying actions that are triggered when certain packets or packet patterns are recognized. The specified actions may include a number of possibilities, including, for example, causing the scheduling parameters of one or more runnables in a system to be changed.

Typically a runtime environment, for example, OS or VMM, has a software component which is configured to observe network activity of all runnables, for example, processes or VMs, in the system. The software component may, for example, belong to the network stack of the runtime, or may be a network driver responsible for managing a physical network adapter. The software component may comprise a firewall component configured to inspect each and every incoming and outgoing packet.

Aspects and embodiments may be operable to implement rules such as: whenever an incoming packet is received to be delivered to a specific VM (or process) on a specific port, the priority of that VM or process is set to X; or to increase the priority of the runnable to the higher of X and the priority currently associated with a runnable; similarly, the rules may be such that whenever a specific VM returns from ready-to-run to suspended, its priority is set to Y.

For example, an implementation based on the two rules set out above, may allow a system to operate such that a VM is normally associated with a low priority at a scheduler or VMM, that priority being designated Y. When specific packet types are received, the priority associated with the VM may be increased to a higher priority, designated X at a scheduler. That increased priority may, for example, be maintained for the time needed to react to the specific packets and send out a suitable response, then the scheduler may return the runnable to the lower priority (Y) after having served the request.

The mechanism of aspects and embodiments described allows for definition of a set of routing and scheduling rules. Each such rule comprises a *trigger* and an *action.* The trigger specifies a condition to be checked for each network packet being handled by the runtime; and if said condition is recognized to be satisfied, then the corresponding action contained in the rule is executed.

The language describing the triggers for the actions in the various rules possesses the expressiveness of a typical firewall, including specialist firewalls, and the language for specifying rules allows the specification of a trigger as a more or less logical combination of multiple conditions.

The language describing the triggers and actions to be taken in response to a trigger is such that it includes conditions related to one or more of: the scheduling state, or parameters of a destination runnable of an incoming packet, or a source runnable of an outgoing packet. Triggers may be set in relation to availability of remaining budgets in reservation-based schedulers. For example a rule may exist which triggers when a received packet is of a given type, and a residual budget within a destination runnable reservation is at least greater than a preselected threshold value.

According to one example, a stateful trigger may be implemented such that the trigger identifies the set-up of a TCP/IP connection of a runnable, or the trigger identifies a packet sent by a runnable in response to a specific HTTP request.

The actions associated with such triggers can be configured to be able to cope with changes in scheduling parameters and changes to state of an involved runnable. For example, changing the priority for a priority-based scheduler; changing the deadline for a deadline-based scheduler; changing the budget and/or period for a reservation-based scheduler.

The syntax for specifying rules and actions is such that it may be possible to specify algebraic expressions involving scheduling parameters to be managed, as well as a time at which a rule is triggered. For example, for a deadline-based scheduling policy, it is possible to say that, whenever a packet of a given protocol/ port is received to be delivered to a specific runnable, the scheduling deadline of that runnable is set a fixed period into the future. In other words, it should be set equal to the current time plus a fixed runnable-specific relative deadline.

The syntax may, according to some embodiments, allow the determination, within packets, protocol-specific fields. Accordingly, in the specification of triggers and/ or actions, the syntax may allow for the use of such protocol-specific information. For example, in a particular protocol, one may define a field conveying some numeric information about the priority of the distributed computation to be carried out, or the accumulated delay since the beginning of the distributed computation, or a time-stamp referring to some specific moment throughout the distributed computation. A triggered rule may be operable to compute simple algebraic expressions based on values determined as part of the trigger, the associated action to be performed, or both. For example, rules may be implemented which allowed the setting of a scheduling deadline by adding a time period to a time-stamp read from the header of a packet, in the context of a specific network protocol.

The mechanism described may be realized, for example, by modifying firewall software, such as the open-source iptables for Linux (http://en.wikipedia.org/wiki/Iptables). Such firewall software is typically operable to intercept all incoming and outgoing traffic travelling across a computing system, and it can also be used in combination with a KVM hypervisor when using Linux as host OS. In such a realization, iptables operates to intercept any incoming, outgoing, or forwarded traffic travelling across a Linux system, including instances when such traffic is directed towards KVM handling VMs. According to such a realization, an iptables rules parser is modified to allow for additional syntax such as that sketched out above, and its engine is extended to handle more complex actions.

Extensions to the allowed actions of such a realization can disrupt the existing functionality of the firewall tool. It will, for example, be appreciated that the firewall tool was designed for security purposes, and this iptables typically only allows a packet to be accepted (ACCEPT) or discarded (REJECT) together with a few variations accept or reject actions. In order to realize the mechanism of aspects and embodiments described herein, more complex actions are supported. Such actions may include: for incoming packets: the setting or modifying (for example, by increasing or decreasing) of scheduling parameters of a process which is going to receive a packet; for outgoing packets: the setting or modifying of scheduling parameters of the process from which the packet originated; in connection with specific protocols whose headers foresee the transmission of scheduling-related data (such as priority levels, deadlines or timestamps) the manipulation of header fields may be allowed as a possible action.

In the case of a variation of a Linux kernel involving multiple kernel threads for handling network packets (for example, the PREEMPT_RT variant of Linux), some embodiments may allow for the addressing, within a rule, of the kernel thread that is going to be woken up to handle the packet next, such as a receive driver. However, since such a decision may need to be taken well ahead of time, in the software chain that handles an incoming packet, such logic may have to be realized by direct coding within the Linux kernel, as opposed to extending a well-established framework such as iptables.

It will be appreciated that, depending on the OS or VMM architecture of a system, whenever a network packet needs to be handled by multiple schedulable entities, for example, kernel threads or regular threads and processes, it is possible to utilize aspects and embodiments described. The mechanism of aspects can be implemented in various places throughout the processing pipeline of network packets, and can be configured to control and fine-tune scheduling parameters controlling both the system runnables that will process the packet next, and the application runnable(s) that will finally receive and handle such packets.

Aspects and embodiments allow customization of behavior of a CPU scheduler in a multi-programmed environment, that customization taking into account what kind of network traffic is being handled by scheduled runnables. This can be particularly useful in virtualized infrastructures where a single VM typically handles heterogeneous types of activities with different timing requirements, including both batch activities as well as real-time interactive and multimedia ones.

Aspects allow for dynamic change of scheduling parameters associated with a runnable in response to reception of a packet. That dynamic change depends on the properties of the received packet. Aspects allow a runtime environment to wake a runnable up and assign the runnable an appropriate priority and/or urgency of execution. Those decisions can be determined based on information derived from a header of received network packets, for example.

The mechanism described herein can be implemented as a customizable feature of a VMM or an OS. Accordingly, system administrators can specify a specific set of rules with custom triggers and actions, depending on the deployment context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adjusting one or more scheduling parameters associated with a runnable in a multi-programmed computing system, said method comprising:
analysing header information associated with a data packet received by said computing system and addressed to or from said runnable;
determining whether said information associated with said data packet meets scheduling action trigger criteria; and
adjusting one or more of said scheduling parameters associated with said runnable in accordance with an action associated with the meeting of said scheduling action trigger criteria.

2. A method according to claim 1, wherein said runnable comprises: a process or virtual machine.

3. A method according to claim 1 or claim 2, wherein said scheduling parameter comprises one or more of: an indication of a scheduling priority, an indication of a scheduling deadline or an indication of a required reservation threshold associated with said runnable.

4. A method according to any preceding claim, wherein said header information comprises one or more of: a specific port to which said data packet is to be delivered; a specific port from which said data packet has been sent; an indication of a transmit time of said data packet; an indication of a scheduling deadline associated with said data packet; an indication of data type carried in said data packet payload; or an indication of a priority associated with said data packet payload.

5. A method according to any preceding claim, wherein adjusting said scheduling parameter comprises one or more of: increasing or decreasing a scheduling priority, updating a scheduling deadline, or selecting a resource reservation associated with said runnable.

6. A method according to any preceding claim, wherein said adjustment to said scheduling parameter is applied before said data packet is forwarded to said runnable.

7. A method according to any preceding claim, wherein said method comprises determining whether said packet is of a type requiring a response packet to pass through said computing system and maintaining said adjustment to said scheduling parameter at least until a response packet is detected.

8. A method according to any preceding claim, wherein if no data packets addressed to or from said runnable are detected within a selected period, setting said scheduling parameter to a default value associated with said runnable.

9. A computer program product operable, when executed on a computer, to perform the method of any one of claims 1 to 8.

10. A scheduling unit operable to adjusting one or more scheduling parameters associated with a runnable in a multi-programmed computing system, said scheduling unit comprising:
analysis logic operable to analyse header information associated with a data packet received by said computing system and addressed to or from said runnable;
trigger logic operable to determine whether said information associated with said data packet meets scheduling action trigger criteria; and
action logic operable to adjust said one or more scheduling parameters associated with said runnable in accordance with an action associated with the meeting of said scheduling action trigger criteria.

## Amended claims

### Amended claims in accordance with Rule 137(2) EPC.

**1.** A method of adjusting one or more scheduling parameters associated with a runnable in a multi-programmed computing system according to a set of routing and scheduling rules each specifying a scheduling action trigger criteria and a corresponding action, said method comprising:
analysing header information associated with a data packet received by said computing system and addressed to or from said runnable;
determining whether said information associated with said data packet meets one of a plurality of scheduling action trigger criteria; and
adjusting one or more of said scheduling parameters associated with said runnable in accordance with said corresponding action associated with the meeting of said scheduling action trigger criteria.

**2.** A method according to claim 1, wherein said runnable comprises: a process or virtual machine.

**3.** A method according to claim 1 or claim 2, wherein said scheduling parameter comprises one or more of: an indication of a scheduling priority, an indication of a scheduling deadline or an indication of a required reservation threshold associated with said runnable.

**4.** A method according to any preceding claim, wherein said header information comprises one or more of: a specific port to which said data packet is to be delivered; a specific port from which said data packet has been sent; an indication of a transmit time of said data packet; an indication of a scheduling deadline associated with said data packet; an indication of data type carried in said data packet payload; or an indication of a priority associated with said data packet payload.

**5.** A method according to any preceding claim, wherein adjusting said scheduling parameter comprises one or more of: increasing or decreasing a scheduling priority, updating a scheduling deadline, or selecting a resource reservation associated with said runnable.

**6.** A method according to any preceding claim, wherein said adjustment to said scheduling parameter is applied before said data packet is forwarded to said runnable.

**7.** A method according to any preceding claim, wherein said method comprises determining whether said packet is of a type requiring a response packet to pass through said computing system and maintaining said adjustment to said scheduling parameter at least until a response packet is detected.

**8.** A method according to any preceding claim, wherein if no data packets addressed to or from said runnable are detected within a selected period, setting said scheduling parameter to a default value associated with said runnable.

**9.** A computer program product operable, when executed on a computer, to perform the method of any one of claims 1 to 8.

**10.** A scheduling unit operable to adjusting one or more scheduling parameters associated with a runnable in a multi-programmed computing system according to a set of routing and scheduling rules each specifying a scheduling action trigger criteria and a corresponding action, said scheduling unit comprising:
analysis logic operable to analyse header information associated with a data packet received by said computing system and addressed to or from said runnable;
trigger logic operable to determine whether said information associated with said data packet meets one of said plurality of scheduling action trigger criteria; and
action logic operable to adjust said one or more scheduling parameters associated with said runnable in accordance with said corresponding action associated with the meeting of said scheduling action trigger criteria.
